# EUROPÄISCHE PATENTSCHRIFT

(11) **EP 2 487 131 B1**
(45) Veröffentlichungstag und Bekanntmachung des Hinweises auf die Patenterteilung: **18.06.2014**
(21) Anmeldenummer: 12000459.3
(22) Anmeldetag: 26.01.2012
(51) Int. Cl.: B66F 17/00, B66F 9/075

(54) **Gegengewichtsflurförderzeug mit einer Vorrichtung zur Bestimmung des Lastmoments**
Counterweight industrial truck with a device for determining load moment
Chariot de manutention à contrepoids doté d'un dispositif de détermination du couple

(30) Priorität: 09.02.2011 DE 102011010709
(43) Veröffentlichungstag der Anmeldung: 15.08.2012
(73) Patentinhaber: Jungheinrich Aktiengesellschaft, 22047 Hamburg (DE)
(72) Erfinder: Geilsdorf, Hendrik, 22417 Hamburg (DE)
(74) Vertreter: Hauck Patent- und Rechtsanwälte

(56) Entgegenhaltungen:
- DE-A1-102005 057 203
- DE-A1-102006 028 551
- JP-A- 2000 044 197

## Beschreibung

Die Erfindung bezieht sich auf ein Gegengewichtsflurförderzeug, insbesondere einen Gegengewichtsstapler, mit einer Vorrichtung zur Bestimmung des Lastmoments nach Anspruch 1.

Insbesondere bei Flurförderzeugen liegt der Schwerpunkt, z.B. mit einer auf einer Gabel aufgenommenen Last, außerhalb der durch die Fahrzeugaufstandspunkte aufgespannten Aufstandsfläche. Deshalb wird als Ausgleich ein Gegengewicht verwendet, das in einem definierten Lastbereich dafür sorgt, dass zumindest der Fahrzeugschwerpunkt in der Fahrzeugkontur liegt und das Fahrzeug nicht umkippt. Die Aufnahme zu großer Lasten oder die Aufnahme von Lasten mit zu weit vorne liegendem Schwerpunkt, unter Umständen in Verbindung mit dynamischen Vorgängen, wie Bremsen oder Rückwärtsbeschleunigen bei angehobener Last, führt bei solchen Fahrzeugen zu einem Kippen über die Vorderachse.

Ein derartiges Kippen kann verhindert werden, wenn das für das Kippen verantwortliche Lastmoment um die Vorderachse bestimmt und darauf entsprechend reagiert wird, z.B. durch Verringerung der maximalen Beschleunigung bzw. Verzögerung, Verringerung der maximalen Neigung des Hubgerüsts oder auch durch Verwendung modellbasierter Verfahren.

Zur Bestimmung des Lastmoments bieten sich verschiedene Messpositionen und Messgrößen an, wie sie an sich bekannt sind:
- Verwendung von Dehnungsmessstreifen (DMS) an einer Lastgabel zur Bestimmung des anliegenden Lastmoments
- Messung des Drucks im Neigezylinder für das Hubgerüst zur Bestimmung der anliegenden Axialkraft und des daraus resultierenden Lastmoments
- Messung der Vertikal- und Horizontalkräfte in einem oder beiden Lastlagern mittels DMS, Kraftmessbolzens zur Bestimmung der Last und des Lastmoments

Bei Vierradfahrzeugen finden sich an der Hinterachse zwei unterschiedliche bekannte Methoden zur Bestimmung der Aufstandskraft und dadurch Berechnung des anliegenden Lastmoments. Einerseits kann eine Messung der Dehnung über diverse Anordnungen von Scher- bzw. Normalkraftaufnehmem vorgenommen werden. Andererseits kann der Abstand der Hinterachse zum Rahmen aufgrund der elastischen Verformung durch das Lastmoment gemessen werden

Für Dreiradfahrzeuge ist bekannt, eine Abstandsmessung des Hinterrads vorzunehmen und daraus das Lastmoment zu ermitteln. Weitere bekannte Verfahren basieren auf der Auswertung allgemein gehaltener Radlastsensoren zur Ermittlung der Längskippkräfte.

Ein großer Teil der genannten Verfahren ist aufwendig zu realisieren und daher kaum serientauglich. Ferner können nichtlineare Effekte, wie Reibung oder parasitäre Kraftverläufe zu Ungenauigkeiten führen.

Aus der JP 2000 044197 A ist eine Vorrichtung zur Messung des longitudinalen Lastmoments eines Flurförderzeugs bekannt geworden.

Aus der DE 10 2005 057 203 A1 ist ein Gabelstapler mit einer heckseitigen Lenkachse und einer Messeinrichtung zur Erfassung der Achslast bekannt geworden.

Der Erfindung liegt die Aufgabe zugrunde, ein Gegengewichtsflurförderzeug mit einer Vorrichtung zur Bestimmung des Lastmoments zu schaffen, mit der auf einfache, wenig störanfällige Art und Weise eine Messung des Lastmoments möglich ist.

Diese Aufgabe wird durch die Merkmale des Patentanspruchs 1 gelöst.

Bei der Erfindung weist der Rahmen des Flurförderzeugs einen im Wesentlichen Längskräfte übertragenden, träger- oder strebenförmigen Rahmenabschnitt auf, und am Rahmenabschnitt ist ein Dehnungssensor angebracht, z.B. ein Dehnungsmessstreifen.

Der Rahmen eines Flurförderzeugs dient neben der Aufnahme von einzelnen Komponenten des Fahrzeugs im Wesentlichen der Übertragung von Kräften, die beispielsweise durch das anliegende Lastmoment entstehen. Das durch die aufgenommene Last nach vom kippend wirkende Lastmoment wird durch das nach hinten kippend wirkende Lastmoment des Gegengewichts kompensiert, und die Übertragung erfolgt durch Biegemomente bzw. Normalkräfte über den Rahmen.

Der Rahmen eines Flurförderzeugs ist üblicherweise eine aus Einzelteilen zusammengeschweißte Einheit, und es ist relativ einfach, einen Abschnitt des Rahmens so anzuordnen bzw. zu formen, dass er als Träger oder Längsstrebe im Wesentlichen nur von Längskräften beansprucht wird. Bringt man den Dehnungssensor an einem derartigen Abschnitt an, so misst er die Dehnungen, die hauptsächlich aus dem anliegenden Lastmoment resultieren. Aktives Beschleunigen bzw. Verzögern sowie Anfahren von Fahrbahnkanten, insbesondere bei niedrigem Lastschwerpunkt, erzeugen hauptsächlich Zug- und Druckkräfte, die durch den unteren Teil des Rahmens übertragen werden und daher im betrachteten Längsträger im Vergleich zu dem durch das Lastmoment aufgebrachten Kräften eher gering sind. Daher ist es von Vorteil, wenn der im Wesentlichen Längskräfte übertragende trägerförmige Rahmenabschnitt im oberen Bereich des Fahrzeugrahmens angeordnet ist.

Kurvenfahrten und entsprechende Querbeschleunigungen erzeugen im längsträgerförmigen Abschnitt des Rahmens hauptsächlich Scherbelastungen, die das gewünschte Messergebnis kaum beeinflussen.

Die Auswahl der Sensorposition erfolgt damit in einer Art und Weise, dass die gemessene Dehnung möglichst unbeeinflusst von Fahrmanövern bleibt und lediglich aus dem aktuellen Lastmoment resultiert. Insbesondere, wenn die Messung nur im Stillstand erfolgt (z.B. beim Aufnehmen oder Absetzen der Last) können Störsignale fast vollständig ausgeschlossen werden.

Aus DE 199 56 623 C2, DE 10 2005 025 647 A1 oder DE 10 2006 055 361 A1 ist bekannt geworden, im Rahmen eine seitliche Einschuböffnung für eine Batterie vorzusehen. Beim Einbau wird die Batterie über diese Öffnung seitlich in das Gehäuse des Flurförderzeugs eingeschoben. Umgekehrt erfolgt die Entnahme der Batterie zu Lade- oder Wartungszwecken durch Herausbewegen aus der Öffnung. Das Ein- und Ausschieben der Batterie kann durch Schienen und Rollen erleichtert werden. In diesem Zusammenhang sieht eine Ausgestaltung der Erfindung vor, dass die Öffnung an der oberen Seite durch einen Längsträger begrenzt und der Dehnungssensor am Längsträger angebracht ist.

Mit einem entsprechend kalibrierten Sensor kann dann aus der Dehnung bei bekanntem Fahrzeugleergewicht und Fahrzeugleerschwerpunkt direkt das anliegende Lastmoment bestimmt werden. Das Lastmoment kann entweder dem Fahrer als Information angezeigt oder als Basis für entsprechende den Betrieb des Fahrzeugs beeinflussende Vorsichtsmaßnahmen verwendet werden. Letztere sind z.B. Verringerung der Fahrzeuggeschwindigkeit, Verringerung der maximalen Neigung des Hubgerüsts, Begrenzung der Hubhöhe des Lastaufnahmemittels usw. Nachfolgend wird die Erfindung anhand eines in Zeichnungen dargestellten Ausführungsbeispiels näher erläutert.
Fig. 1 zeigt schematisch die Seitenansicht eines Gegengewichtsstaplers mit einer schematischen Darstellung der Messung des Lastmoments.
Fig. 2 zeigt perspektivisch einen Rahmen des Gegengewichtsstaplers nach Fig. 1 mit Mitteln zur Messung des Lastmoments.

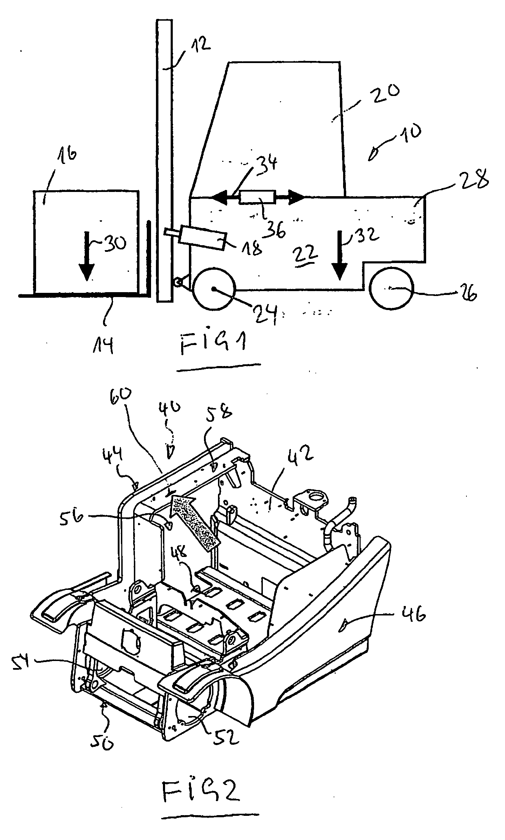

In Fig. 1 ist schematisch ein Gegengewichtsstapler 10 dargestellt mit einem Hubgerüst 12, an dem eine Lastgabel 14 höhenbeweglich geführt ist, die ihrerseits von einem nicht gezeigten Hubantrieb betätigt wird. Auf der Lastgabel 14 liegt eine Last 16. Das Hubgerüst kann durch einen Neigezylinder 18 in seiner Neigung verändert werden. Das Flurförderzeug 10 weist eine Fahrerkabine 20 auf und ein Gehäuse 22, in dem die für den Betrieb des Flurförderzeugs 10 erforderlichen Teile und Aggregate untergebracht sind. Das Flurförderzeug hat eine Vorderachse 24 und eine Hinterachse 26. Die Hinterachse befindet sich unterhalb eines Gegengewichts 28, durch welches das die Last 16 verursachte Lastmoment kompensiert wird. In Fig. 1 ist der Schwerpunkt der Last 16 durch Pfeil 30 angedeutet. Der Schwerpunkt des Fahrzeugs ist durch Pfeil 32 angedeutet. Ein in Fig. 1 nicht dargestellter Rahmen des Fahrzeugs muss daher die von Last und Fahrzeug erzeugten Momente übertragen. Die Übertragung des Moments erfolgt im Wesentlichen durch Zugkräfte im oberen Bereich des Fahrzeugs in Längsrichtung während Druckkräfte im unteren Bereich wirken. Bei einem plötzlichen Abbremsen werden im Wesentlichen Druckkräfte übertragen. Die Kräfte sind durch Doppelpfeil 34 angedeutet. Ein Dehnungssensor 36 ist im Fahrzeug so angeordnet, dass er im Wesentlichen die übertragenen Längskräfte ermittelt. Hierzu ist erforderlich, dass der Rahmen einen trägerförmigen oder strebenförmigen, sich im Wesentlichen in Längsrichtung erstreckenden Abschnitt aufweist, der im Wesentlichen nur Längskräfte zu übertragen im Stande ist. Quer- und Torsionskräfte, die ebenfalls auftreten, sind gegenüber den Längskräften zu vernachlässigen und wirken sich nicht störend auf den Dehnungssensor aus.

In Fig. 2 ist ein Rahmen 40 eines Flurförderzeugs dargestellt, beispielsweise für das Flurförderzeug 10 nach Fig. 1. Der Rahmen ist aus geschweißten Blechen zusammengesetzt. An einer hinteren Blechwand 42 sind Seitenteile 44, 46 angeschweißt sowie auch eine Bodenplatte 48. Im vorderen Bereich ist eine Anordnung 50 angeschweißt zur Aufnahme der Vorderachse. Hierzu sind Öffnungen 52 bzw. 54 vorgesehen. Hinter der Rückwand 42 des Rahmens 40 wird das nicht gezeigte Gegengewicht angebracht. Außerdem wird darunter die Hinterachse montiert, was ebenfalls nicht dargestellt ist. Es soll im Übrigen auch auf den Rahmen nicht näher eingegangen werden, da er im Wesentlichen konventionell ausgeführt ist.

Während das Seitenteil 46 als durchgehende Wange ausgebildet ist, befindet sich auf der gegenüberliegenden Seite eine Einschuböffnung 56 für eine nicht gezeigte Batterie zur Energieversorgung des Flurförderzeugs. Die obere Seite der Öffnung 56 wird durch einen Träger 58 begrenzt. Dieser Träger verbindet die hintere Wand 42 mit dem vorderen Bereich, der zur Aufnahme der Vorderachse dient. Wie ohne weiteres zu erkennen, werden auf den Träger 58 durch die erwähnten Lastmomente im Wesentlichen nur Zugkräfte übertragen. Ein auf dem Träger 58 bei 60 angeordneter Dehnungssensor kann diese Kräfte messen. Sie entsprechen im Wesentlichen dem Moment, das vom Leermoment und von der Last verursacht wird.

Aktives Beschleunigen oder Verzögern beim Bremsen oder Anfahren bzw. beim Anfahren von Fahrbahnkanten erzeugt im Wesentlichen Zug- und Druckkräfte, die durch den unteren Teil des Rahmens 40 übertragen werden und daher im betrachteten Längsträger 58 im Vergleich zu den durch das Lastmoment aufgeprägten Kräften gering sind. Kurvenfahrten und entsprechende Querbeschleunigungen erzeugen im Längsträger 58 hauptsächlich Scherbelastungen, die das gewünschte Messergebnis kaum beeinflussen. Die Messwerte des Dehnungssensors 60 können entweder dem Fahrer angezeigt werden und/oder als Basis für entsprechende Vorkehrungen dienen, die einem Kippen entgegenwirken sollen. Entsprechende Maßnahmen sind z.B. Verringerung der Fahrgeschwindigkeit, Verringerung der maximalen Neigung des Hubgerüstes 12, Begrenzung der Hubhöhe der Last 16 usw. Derartige Steuerungen und Regelungen zur Veränderung der Kippneigung sind vielfältig bekannt geworden.

## Patentansprüche

1. Gegengewichtsflurförderzeug (10) mit einer Vorrichtung zur Bestimmung des Lastmoments bei auf einem Lastaufnahmemittel aufgenommener Last (16), wobei das Lastaufnahmemittel an einem vor der Vorderachse des Flurförderzeugs (10) angeordneten Hubgerüst (12) geführt ist und ein Gegengewicht im Bereich der Hinterachse des Flurförderzeugs (10) angeordnet ist und wobei Hubgerüst (12), Vorderachse sowie Gegengewicht an einem als Einheit ausgebildeten Rahmen (40) gelagert sind, der Rahmen (40) einen im Wesentlichen Längskräfte übertragenden träger- oder strebenförmigen Rahmenabschnitt (58) aufweist, am Rahmenabschnitt ein Dehnungssensor (60) angebracht ist, **dadurch gekennzeichnet, dass** der Rahmen (40) eine seitliche Einschuböffnung (56) für eine Batterie aufweist, die Öffnung (56) an der oberen Seite durch einen Längsträger (58) begrenzt und der Dehnungssensor (60) an dem Längsträger (58) angebracht ist.

2. Gegengewichtsflurförderzeug nach Anspruch 1, **dadurch gekennzeichnet, dass** der Dehnungssensor (60) ein Dehnungsmessstreifen (DMS) ist. '

## Claims

1. A counterweight industrial truck (10) with an apparatus for determining the load torque for a load (16) received on load-carrying equipment, wherein the load-carrying equipment is guided on a lifting frame (12) arranged in front of the front axle of the industrial truck (10) and a counterweight is arranged in the area of the rear axle of the industrial truck (10) and wherein the lifting frame (12), the front axle as well as the counterweight are mounted on a frame (40) designed as a unit, the frame (40) has a carrier- or brace-like frame section (58) mainly transferring longitudinal forces, an expansion sensor (60) is attached to the frame section, **characterized in that** the frame (40) has a lateral slide-in opening (56) for a battery, the opening (56) on the top side is bordered by a longitudinal carrier (58) and the expansion sensor (60) is attached to the longitudinal carrier (58).

2. The counterweight industrial truck according to claim 1, **characterized in that** the expansion sensor (60) is an expansion measuring strip (EMS).

## Revendications

1. Chariot de manutention à contrepoids (10), avec un dispositif destiné à définir le moment de charge dans le cas d'une charge (16) reçue par un moyen de réception de charge, le moyen de réception de charge étant guidé sur un châssis de levage (12) disposé devant l'essieu avant du chariot de manutention (10), et un contrepoids étant disposé dans la zone de l'essieu arrière du chariot de manutention (10), et le châssis de levage (12), l'essieu avant ainsi que le contrepoids étant supportés sur un cadre (40) constitué en tant qu'unité, le cadre (40) présentant un tronçon de cadre (58) porteur ou un tronçon de cadre en forme d'entretoise transmettant essentiellement des forces longitudinales, un capteur de dilatation (60) étant placé sur le tronçon de cadre, **caractérisé en ce que** le cadre (40) présente une ouverture d'insertion (56) latérale pour une batterie, l'ouverture (56) étant limitée sur le côté supérieur par un longeron (58), et le capteur de dilatation (60) étant placé sur le longeron (58).

2. Chariot de manutention à contrepoids selon la revendication 1, **caractérisé en ce que** le capteur de dilatation (60) est une jauge extensométrique.
